# EUROPÄISCHE PATENTSCHRIFT

(11) **EP 1 540 308 B1**
(45) Veröffentlichungstag und Bekanntmachung des Hinweises auf die Patenterteilung: **25.10.2006**
(21) Anmeldenummer: 03797154.6
(22) Anmeldetag: 05.06.2003
(51) Int. Cl.: G01N 15/06, G01N 27/70

(54) **VORRICHTUNG UND VERFAHREN ZUR MESSUNG DER KONZENTRATION VON IN EINEM STRÖMENDEN GAS VORHANDENEN GELADENEN PARTIKELN**
DEVICE AND METHOD FOR MEASUREMENT OF THE CONCENTRATION OF CHARGED PARTICLES PRESENT IN A FLOWING GAS
PROCEDE ET DISPOSITIF POUR MESURER LA CONCENTRATION DE PARTICULES CONTENUES PAR UN ECOULEMENT GAZEUX

(30) Priorität: 12.09.2002 DE 10242301
(43) Veröffentlichungstag der Anmeldung: 15.06.2005
(73) Patentinhaber: ROBERT BOSCH GMBH, 70442 Stuttgart (DE)
(72) Erfinder: BAUER, Walter, 71735 Eberdingen (DE)
(86) Internationale Anmeldenummer: PCT/DE2003/001854
(87) Internationale Veröffentlichungsnummer: WO 2004/027394

(56) Entgegenhaltungen:
- DE-A- 4 008 348
- DE-A- 19 946 786
- US-A- 1 105 604
- US-A- 4 312 180

## Beschreibung

Die Erfindung betrifft eine Vorrichtung zur Messung der Konzentration von in einem strömenden Gas vorhandenen Partikeln mit den im Oberbegriff des Anspruchs 1 genannten Merkmalen.

### Stand der Technik

Aus dem Stand der Technik DE 2 224 578 ist ein Verfahren und eine Messsonde zur Messung der Durchflussmenge eines Gases bekannt. Dabei wird als Maß für den Massendurchsatz oder die Geschwindigkeit des Gases die Änderung der Laufzeit und die Bahn der Ionen eines Ionenstrahls herangezogen. Dazu wird im Inneren der Vorrichtung ein Ionenstrahl erzeugt und intermittiert. Der Druckschrift ist zu entnehmen, dass die Vorrichtung vorteilhafter Weise unabhängig von Verunreinigungen, die im Gas enthalten sein können, arbeitet. Eine derartige Messvorrichtung ist daher wenig geeignet den Anteil an Verunreinigung durch Partikel im Gas zu messen.

Weiterhin ist aus dem Stand der Technik DE 196 516 11 eine Einrichtung zur Messung einer Teilchenzustandsgröße eines elektrisch geladene Teilchen enthaltenden strömenden Mediums bekannt. Die Teilchenzustandsgröße ist entweder die Teilchendichte oder die Teilchengeschwindigkeit oder der Teilchendurchsatz. Dazu ist wenigstens ein flächenhaftes Sensorelement in Form einer Elektrode parallel zur Teilchenflugrichtung angeordnet. Das Sensorelement detektiert durch die sich vorbeibewegenden geladenen Teilchen Ladungsverschiebungen, die eine Veränderung im elektrischen Ausgangssignal des Sensors verursachen. Diese Veränderung dient als Maß für die Teilchenkonzentration. Die Ladung der Teilchen rührt von den im Motor durch die Verbrennung ablaufenden chemischen Reaktionen her. Nachteilhafterweise sind jedoch die Ladungen der Partikel nicht konstant und die messbaren Veränderungen im Ausgangssignal des Sensors sehr gering. Eine präzise und wenig fehlerbehaftete Signalauswertung ist daher kaum oder nur mit hohem Aufwand realisierbar.

### Vorteile der Erfindung

Die erfindungsgemäße Vorrichtung zur Messung der Konzentration von in einem strömenden Gas vorhandenen Partikeln mit den in Patentanspruch 1 angegebenen Merkmalen bietet gegenüber dem Stand der Technik den Vorteil einer hohen Messgenauigkeit und eines großen Messbereichs. Mittels einer weiteren Messelektrode kann in Verbindung mit der ersten Messelektrode die Strömungsgeschwindigkeit gemessen werden. Die weitere Messelektrode ist dazu in Strömungsrichtung hinter der ersten Messelektrode angeordnet. Damit sind auch die Laufzeit, der Volumenstrom und der Massenstrom des Abgases messbar. Dabei ist in die beispielsweise zylindrischen Messelektroden mindestens eine beispielsweise zylinderförmige Ablenkelektrode eingebaut, wobei jede der Ablenkelektroden auf einem eignen bestimmten Potenzial liegen kann. Das so zwischen der Ablenkelektrode und der Messelektrode aufgebaute radiale elektrische Feld sorgt für eine größenabhängige, ladungsabhängige und geschwindigkeitsabhängige Abscheidung der Partikel auf den verschiedenen Messelektroden.

Zudem kann eine Feldsperre zwischen dem Ionisator und der Messelektrode vorgesehen sein. Die Feldsperre hält die vom Ionisator ausgehenden elektrischen Felder von der bzw. den Messelektroden fern. Des weiteren wird bewirkt, dass die Partikel nach ihrer Größe selektiert werden können. Es kann von Vorteil sein, die kleinsten Partikel von den Messelektroden fernzuhalten.

In einer bevorzugten Ausführungsform der Erfindung weist die Feldsperre zwei Gitter auf, wobei das eine Gitter auf einem ersten Potenzial und das zweite Gitter auf einem zweiten Potenzial liegt. Dies führt zu einer verbesserten Partikelselektion. Auf diese Weise ist auch eine Aussage über die Verteilung der Partikelgröße möglich.

Durch eine ringförmige Ausbildung der Messelektrode wird erreicht, dass annähernd das gesamte Abgas die Messelektrode passiert. Mögliche Ablagerungen an den Messelektroden stören die Messung nur, wenn diese Ablagerungen extrem leitfähig sind.

Durch eine ringförmige Ausbildung des Ionisators wird erreicht, dass ebenso wie bei der Messelektrode, annähernd das gesamte Abgas den Ionisator passiert. Ablagerungen auf der Ionisatorelektrode werden durch Kriechentladungen abgetragen. Eine Strommessung an der Ionisatorelektrode wird nicht gestört.

Vorteilhafterweise weist der Ionisator deshalb eine Außenelektrode auf, wobei eine Messeinheit zur Messung des Ionenstroms auf der Außenelektrode des Ionisators vorgesehen ist. Damit ist eine Funktionskontrolle des Ionisators möglich. Zusätzlich kann darüber ein Referenzmaß für die Ionisierungswahrscheinlichkeit der Partikel erzeugt werden. Mögliche Ablagerungen an der Außenelektrode stören die Messung nur, wenn diese extrem leitfähig sind.

In einer weiteren Ausführungsform der Erfindung ist eine Elektrode zur kapazitiven Einkopplung einer Spannung in die Messelektrode vorgesehen. Damit ist eine Testspannung erzeugbar, mittels der die Funktionsfähigkeit der Messelektrode überwachbar ist.

Die Messelektrode und der Ionisator können vollständig oder zum Teil in einem Rohr angeordnet sein. Die Messelektrode und der Ionisator können auch als Einbauelement vorgesehen sein.

### Zeichnungen

Die Erfindung wird im Folgenden anhand von zwei Figuren weiter beschrieben.
- Figur 1: zeigt eine Ausführungsform der erfindungsgemäßen Vorrichtung in Querschnitt.
- Figur 2: zeigt eine weitere Vorrichtung im Querschnitt.

### Beschreibung

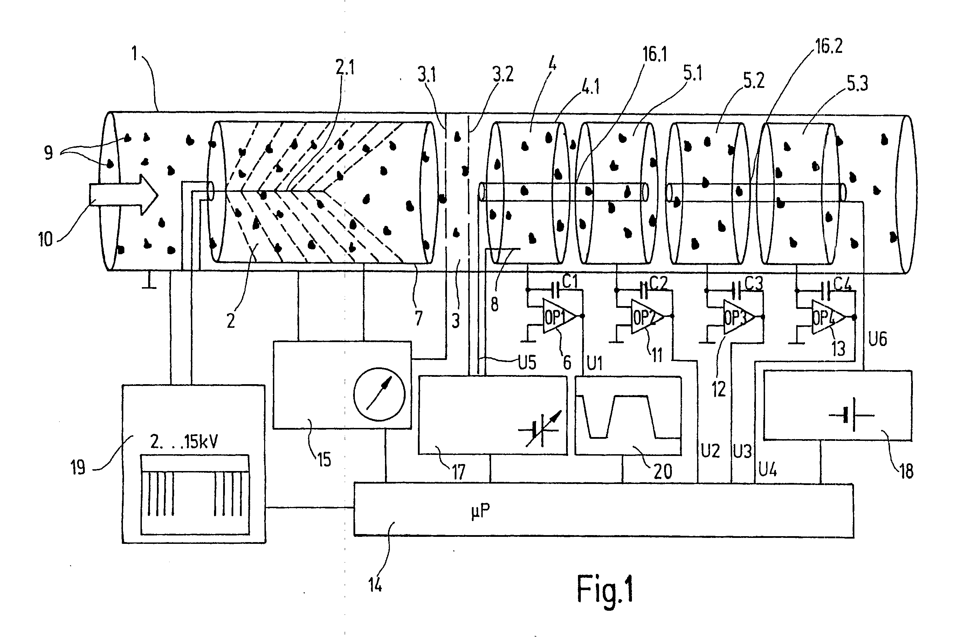

In Figur 1 ist eine Ausführungsform der erfindungsgemäßen Vorrichtung zur Messung der Konzentration von in einem strömenden Fluid oder Gas vorhandenen geladenen Partikeln 9 gezeigt. In einem Rohr 1, insbesondere einem Abgasrohr, ist ein Ionisator 2 eingebaut. Das Rohr 1 wird von Partikeln 9, insbesondere Rußpartikeln, welche sich im Abgas befinden, in einer Strömungsrichtung 10 durchströmt. Die Partikel 9 durchströmen dabei auch den Ionisator 2. In Strömungsrichtung 10 hinter den Ionisator 2 sind eine Feldsperre 3, eine Messelektrode 4, drei weitere Messelektroden 5.1, 5.2 und 5.3 sowie zwei Ablenkelektroden 16.1 und 16.2 angeordnet. Das Gas mit den Rußpartikeln 9 durchströmt dabei den Ionisator 2, die Feldsperre 3, die erste Messelektrode 4 und die drei weiteren Messelektroden 5.1, 5.2 und 5.3 mit den Ablenkelektroden 16.1 und 16.2.

An die Ablenkelektroden 16.1 und 16.2 ist mittels einer Spannungsquelle 18 jeweils eine bestimmte Spannung anlegbar. Die von der Spannungsquelle 18 erzeugten Spannungen können je nach Bedarf auch unterschiedlich sein.

Der Ionisator (2) kann mit einer gepulsten Gleichspannung oder einer niederfrequenten Wechselspannung betrieben werden, welche vorzugsweise eine Hochspannung ist.

Das Abgas mit den Rußpartikeln 9 wird zunächst durch den zylinderförmigen Ionisator 2 geleitet. Der Ionisator 2 weist eine erste längliche Elektrode 2.1 und eine zweite zylinderförmige Elektrode 7, im Folgenden auch Außenelektrode oder Gegenelektrode genannt, auf. An die beiden Elektroden 2.1 und 7 wird mittels einer Spannungsquelle 19 eine Hochspannung, beispielsweise zwischen 2 und 15 kV, angelegt. Dabei findet eine Koronaentladung an der Elektrode 2.1 statt, die dazu führt, dass Ladungsträger in Form von Gasionen und Elektronen durch die angelegte Spannung von der Elektrode 2.1 in Richtung Außenelektrode 7 und damit in Richtung der Wand des Abgasrohrs 1 gezogen werden. Die Ladungsträger treffen dabei auch die Rußpartikel 9 im Abgas und laden die Partikel 9 auf. Auf Grund der hohen Beweglichkeit der Ladungsträger erreichen diese die Gegenelektrode 7 sehr schnell und werden somit kaum in Richtung des Abgasstroms 10 transportiert. Hingegen gelangen die durch die Ladungsträger (Gasionen und freie Elektronen) aufgeladenen Partikel 9 nur relativ langsam an die Gegenelektrode 7. Auf Grund der geringen Aufladung der Rußpartikel 9 - etwa 2 bis 3 Elementarladungen - ist die auf sie wirkende elektrostatische Kraft quer zur Strömungsrichtung 10 vergleichbar mit der auf ein ionisiertes Gasmolekül wirkenden Kraft. Die im fließenden Gasstrom auf die Teilchen oder Partikel 9 wirkenden Reibungskräfte sind jedoch erheblich größer als die auf die Gasionen wirkende Reibungskraft. Dadurch werden die aufgeladenen Partikel 9 vom Abgasstrom aus dem Ionisationsbereich durch die auf festem Potenzial, beispielsweise auf Masse, liegende Feldsperre 3, auch Sperrgitter genannt, hindurch in den Messbereich getragen, wohingegen die Ionen den Ionisationsbereich nicht verlassen, weil sie in kürzester Zeit auf die Gegenelektrode oder auf die Gitter 3.1 und 3.2 der Feldsperre 3 treffen.

Nachdem die Rußpartikel 9 den Ionisator 2 durchströmt haben, sind sie elektrostatisch aufgeladen und geben entweder ihre Ladung beim Berühren der Messelektroden 4, 5.1, 5.2 und 5.3 ab oder influenzieren beim Passieren der Messelektroden 4, 5.1, 5.2 und 5.3 eine Ladungsverschiebung. Das heißt, die elektrostatisch aufgeladen Partikel 9 beeinflussen durch die Annäherung an bzw. durch den Aufenthalt in den Messelektroden 4, 5.1, 5.2 und 5.3 dort die Ladungen, was zu einer Ladungsverschiebung führt. Die Ladungsabgabe und die Ladungsverschiebung ist gleichwertig und wird von den Messelektroden 4, 5.1, 5.2 und 5.3 und den damit verbundenen Ladungsverstärkern 6, 11, 12 und 13 in Spannungen U1, U2, U3 und U4 transformiert. Die Ladungsverstärker 6, 11, 12 und 13 können als Operationsverstärker OP1, OP2, OP3 und OP4 mit hochohmigem Eingang, also z.B. mit Feldeffekt-Eingang, mit jeweils im Rückkopplungszweig liegenden Kondensatoren C1, C2, C3, C4 aufgebaut sein. Zusätzlich kann im Rückkopplungszweig ein hochohmiger Widerstand vorgesehen sein.

Die Messelektrode 4 weist eine vorzugsweise ringförmige, den Abgasstrom um schließende Metallelektrode 4.1 auf. Gleiches gilt für die Messelektroden 5.1, 5.2 und 5.3.

Alle Messelektroden 4, 5.1, 5.2 und 5.3 können mit einer Isolationsschicht abgedeckt sein, um die direkte Ladungsabgabe auszuschließen.

Die Elektrode 4.1 ist mit einem Eingang des Ladungsverstärkers 6 gekoppelt. Zur Gewinnung der Partikelbeladung des Abgases wird die Amplitude des am Ausgang des Ladungsverstärkers 6 anliegenden Signals ausgewertet. Zudem kann auch dessen zeitliches Verhalten, zum Beispiel relativ zum mit der Spannungsquelle 19 erzeugten Modulationssignal, welches am Ionisator 2 anliegt, ausgewertet werden. Dadurch können die Laufzeit, die Gasgeschwindigkeit, der Volumenstrom und der Massestrom des Abgases ausgewertet werden.

Die von den Ladungsverstärkern 6, 11, 12 und 13 abgegebenen Spannungssignale U1, U2, U3 und U4 sind von der Ladungsdichte der elektrisch geladenen Partikel 9 abhängig. Jede gewonnene Spannung U1, U2, U3 und U4 erhöht sich somit mit der Partikelkonzentration und der Partikelladung. Die Signalverläufe, die sich am Ausgang der Ladungsverstärker 6, 11, 12 und 13 einstellen, sind als Spannungssignale U1, U2, U3 und U4 abgreifbar. Für die Spannung U1 ist dessen Verlauf im Block 20 beispielhaft gezeigt. Die Spannungssignale U1, U2, U3 und U4 werden im Mikroprozessor 14 ausgewertet. Infolge der Bewegungsrichtung 10 der Partikel 9 von Messelektrode 4 über Messelektroden 5.1 und 5.2 hin zur Messelektrode 5.3 sind die Spannungssignale U1, U2, U3 und U4 gegeneinander zeitlich um Transportzeiten t1, t2 bzw. t3 verschoben. Bei angelegter Ablenkspannung trifft dies jedoch nur auf die bis zur letzten Elektrode fliegenden geladenen Partikel 9 zu. Die Transportzeiten t1, t2 bzw. t3 sind die Zeiten, welche die Teilchen benötigen, um von der Messelektrode 4 zur Messelektrode 5.1 bzw. zur Messelektrode 5.2 bzw. zu Messelektrode 5.3 zu gelangen.

Die Spannungssignale U1, U2, U3 und U4 werden in einer zum Beispiel mikroprozessorgesteuerten Auswerteeinrichtung 14 sowohl einer Amplitudenauswertung unterzogen als auch hinsichtlich ihrer zeitlichen Verschiebungen t1, t2 und t3 gegeneinander ausgewertet.

Je nach Auswerteart kann die Konzentration der elektrisch geladenen Teilchen 9, die Teilchengeschwindigkeit oder aus der Multiplikation von Teilchenkonzentration und Teilchengeschwindigkeit auch der Teilchendurchsatz und bei angelegter Ablenkspannung auch noch eine Größenverteilung ermittelt werden.

Die Amplitudenauswertung des einzelnen Signals führt dabei zu einem Maß für die Beladung des Abgasstroms mit elektrisch geladenen Teilchen 9, zum Beispiel mit Rußteilchen. Durch die Auswertung der statischen Ähnlichkeiten (Korrelationen) zweier Signale z.B. U1 und U2, die von unterschiedlichen Messelektroden, z.B. 4 und 5.1, stammen und die zeitlich um die Transportzeit t1 der Partikel 9 gegeneinander verschoben sind, lässt sich auch ein Maß für die Strömungsgeschwindigkeit des Abgasstroms gewinnen. Durch eine Bewertung der Amplitudenverhältnisse der Spannungen U1, U2, U3 und U4 sowie der Ablenkspannungen U5 und U6, welche mittels der zwei Spannungsquellen 17 bzw. 18 erzeugt werden, kann eine Aussage über die Größenverteilung gemacht werden.

Die Spannungsquellen 17 und 18 werden von einem Mikroprozessor 14 gesteuert.

Zur Funktionskontrolle des Ionisators 2 und zur Gewinnung eines Referenzmaßes für die Ionisierungswahrscheinlichkeit der Partikel 9 kann der auf der Außenelektrode 7 mit einer Messeinheit 15 gemessene Ionenstrom der Gasmoleküle herangezogen werden, wobei ein geringer Teil des Ionenstroms bereits durch die Partikel 9 aufgenommen wird und ein weiterer Teil des Ionenstroms gegebenenfalls auf die Feldsperre verweht wird. In diesem Fall kann die Elektrode 3.1 der Feldsperre zusätzlich zur Gewinnung des Referenzsignals für die Ionisierung verwendet werden.

Die korrekte Funktion der Messelektrode 4 kann durch die kapazitive Einkopplung einer Testspannung, zum Beispiel einer Wechselspannung oder einer pulsierenden Gleichspannung, über eine Testelektrode 8 oder über die Ablenkelektroden erfolgen.

Die gleiche Funktion kann auch durch eine benachbarte Messelektrode oder durch die in der Nähe liegende Sperrelektrode 3.2 übernommen werden.

Des Weiteren kann die Feldsperre 3 aktiv dazu benutzt werden, um eine Größenselektion der geladenen Partikel 9 durchzuführen. Um beispielsweise die kleinsten Partikel von den Messelektroden 4, 5.1, 5.2 und 5.3 fern zu halten, ist es hilfreich, die Feldsperre 3 aus mindestens zwei gitterförmigen Elektroden 3.1 und 3.2 aufzubauen. Zwischen diesen Elektroden 3.1 und 3.2 wird ein starkes elektrisches Feld angelegt. Das elektrische Feld drängt je nach Gasdurchflussgeschwindigkeit die kleineren hoch geladenen Partikel 9 mehr oder weniger stark zurück. Auf diese Weise kann eine Aussage über die Größenverteilung der Partikel 9 gemacht werden. Größere Partikel 9 können in ein zwischen den Ionisator 2 und die Messelektroden 4, 5.1, 5.2 und 5.3 geschaltetes radiales beziehungsweise senkrecht zur Strömungsrichtung 10 angelegtes elektrische Feld abgezogen werden. Je nach Feldstärke und Strömungsgeschwindigkeit gelangen nur die größten Partikel 9 zu den Messelektroden 4, 5.1, 5.2 und 5.3.

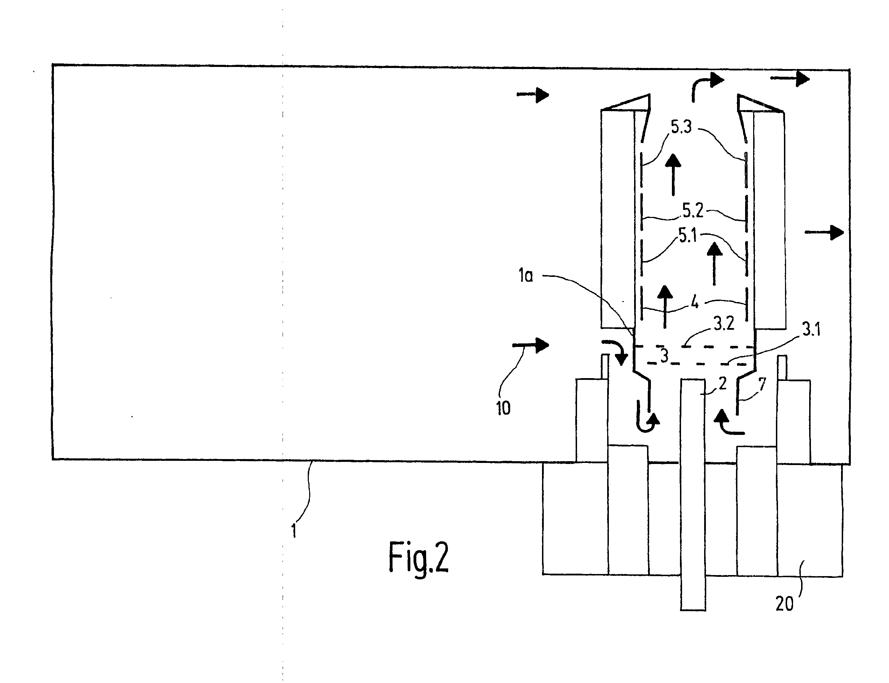

In Figur 2 ist eine weitere Vorrichtung zur Messung der Partikelkonzentration gezeigt. Quer zur Längsrichtung des Rohres 1 ist die Messvorrichtung als einsetzbares Element in eine im Umfang des Rohres 1 vorhandene Öffnung eingebaut. Die Verbindung zwischen dem Rohr 1 und dem einsetzbaren Element wird durch einen Flansch 20 bewirkt. Das Abgas strömt im Rohr 1 am Ionisator 2 entlang und wird dabei zusammen mit den Partikeln 9 elektrisch geladen. Anschließend strömt das Gas mit den geladenen Abgaspartikeln 9 durch das Sperrgitter 3 und gelangt in den Bereich der Messelektroden 4, 5.1, 5.2 und 5.3. Damit das Abgas den beschriebenen Weg entlang strömt, ist ein separater Abgasleiter 1a vorgesehen. Nachdem das Abgas die Messelektroden 4, 5.1, 5.2 und 5.3 passiert hat, gelangt es wieder in den Hauptströmungskanal des Rohres 1. Mit einer derartigen Anordnung, welcher der einer Lamdasonde ähnlich ist, ist eine Reduktion des Bauraums möglich. Eine Rückströmung des Abgases wird gleichgerichtet.

Die Anzahl der verwendeten Messelektroden 4, 5.1, 5.2 und 5.3 richtet sich nach den technischen Erfordernissen. Genügt die Erfassung der Partikelkonzentration, so reicht die Messelektrode 4. Mit einer Kombination aus zwei Messelektroden 4 und 5.1 ist zusätzlich die Strömungsgeschwindigkeit bestimmbar. Dazu ist es jedoch nicht erforderlich, dass wie in Figur 2 gezeigt, neben der Messelektrode 4 noch die drei weiteren Messelektroden 5.1, 5.2 und 5.3 zum Einsatz kommen.

Wird die beschriebene Erfindung zur berührungslosen Messung der Teilchenkonzentration in den Auspuff eines Dieselmotors eingesetzt, lässt sich eine Größe gewinnen, die ein Maß für den emittierten Ruß des Motors darstellt. Diese Größe kann als Regelgröße oder als zusätzliche Messgröße im Betrieb des Dieselmotors zur Regelung des Einspritzsystems verwendet werden. Weiterhin kann der Beladungszustand eines Partikelfilters hiermit ermittelt werden.

Die Erfindung ist jedoch nicht auf die Rußmessung bei Dieselmotoren beschränkt, sondern kann allgemein zur Erfassung von bewegten elektrisch geladenen Teilchen verwendet werden.

## Patentansprüche

1. Vorrichtung zur Messung der Konzentration von in einem strömenden Gas vorhandenen geladenen Partikeln, mit einer ersten Messelektrode (4) zur Messung der Partikelladung, **dadurch gekennzeichnet, dass** ein Ionisator (2) zur Aufladung der Partikel (9) vorgesehen ist, dass die Messelektrode (4) in Strömungsrichtung (10) hinter dem Ionisator (2) angeordnet ist, dass eine weitere Messelektrode (5.1, 5.2, 5.3) vorgesehen ist, um in Verbindung mit der ersten Messelektrode (4) die Strömungsgeschwindigkeit zu messen, und in Strömungsrichtung (10) hinter der ersten Messelektrode (4) angeordnet ist, dass eine Ablenkelektrode (16.1, 16.2) vorgesehen ist, wobei die Meßelektroden (4, 5.1, 5.2, 5.3) über Ladungsverstärker (6, 11, 12, 13), insbesondere Operationsverstärker, auf Masse geschaltet sind und wobei die Ablenkelektrode zur größenabhängigen Abscheidung der Partikel auf den verschiedenen Meßelektroden eingerichtet ist.

2. Vorrichtung nach Patentanspruch 1, **dadurch gekennzeichnet, dass** eine Feldsperre (3) zwischen dem Ionisator (2) und der ersten Messelektrode (4) vorgesehen ist.

3. Vorrichtung nach Patentanspruch 2, **dadurch gekennzeichnet, dass** die Feldsperre (3) zwei Gitter (3.1, 3.2) aufweist, wobei das eine Gitter (3.2) mit einer Spannungsquelle (17) und das andere Gitter (3.1) mit einer Messeinheit (15) zur Strommessung verbunden ist.

4. Vorrichtung nach einem der Patentansprüche 1 bis 3, **dadurch gekennzeichnet, dass** die Messelektroden (4, 5.1, 5.2, 5.3) ringförmig ausgebildet sind.

5. Vorrichtung nach einem der Patentansprüche 1 bis 4, **dadurch gekennzeichnet, dass** der Ionisator (2) ringförmig ausgebildet ist.

6. Vorrichtung nach einem der Patentansprüche 1 bis 5, **dadurch gekennzeichnet, dass** der Ionisator (2) eine Außenelektrode (7) aufweist, und eine weitere Messeinheit (15) zur Messung des Ionenstroms auf der Außenelektrode (7) vorgesehen ist.

7. Vorrichtung nach einem der Patentansprüche 2 bis 6, **dadurch gekennzeichnet, dass** mittels einer Elektrode (8) oder der Feldsperre (3.2) oder der weiteren Messelektrode (5.1, 5.2, 5.3) eine Spannung in die Messelektrode (4) kapazitiv einkoppelbar ist.

8. Vorrichtung nach einem der Patentansprüche 1 bis 7, **dadurch gekennzeichnet, dass** die Messelektrode (4, 5) und der Ionisator (2) in einem Rohr (1) angeordnet sind.

## Claims

1. Device for measuring the concentration of charged particles present in a flowing gas, having a first measuring electrode (4) for measuring the particle charge, **characterized in that** an ionizer (2) is provided for charging the particles (9), **in that** the measuring electrode (4) is arranged downstream of the ionizer (2) in the flow direction (10), **in that** a further measuring electrode (5.1, 5.2, 5.3) is provided in order to measure the flow rate in conjunction with the first measuring electrode (4) and is arranged downstream of the measuring electrode (4) in the flow direction (10), and **in that** a deflecting electrode (16.1, 16.2) is provided, the measuring electrodes (4, 5.1, 5.2, 5.3) being connected to earth via charge amplifiers (6, 11, 12, 13), in particular operational amplifiers, and the deflecting electrode being designed for size-dependent deposition of the particles on the various measuring electrodes.

2. Device according to Patent Claim 1, **characterized in that** a field barrier (3) is provided between the ionizer (2) and the first measuring electrode (4).

3. Device according to Patent Claim 2, **characterized in that** the field barrier (3) comprises two grids (3.1, 3.2), one grid (3.2) being connected to a voltage source (17) and the other grid (3.1) being connected to a measuring unit (15) for current measurement.

4. Device according to one of Patent Claims 1 to 3, **characterized in that** the measuring electrodes (4, 5.1, 5.2, 5.3) are annularly designed.

5. Device according to one of Patent Claims 1 to 4, **characterized in that** the ionizer (2) is annularly designed.

6. Device according to one of Patent Claims 1 to 5, **characterized in that** the ionizer (2) comprises an outer electrode (7), and a further measuring unit (15) is provided for measuring the ion current on the outer electrode (7).

7. Device according to one of Patent Claims 1 to 6, **characterized in that** a voltage can be coupled capacitively into the measuring electrode (4) by means of an electrode (8) or the field barrier (3.2) or the further measuring electrode (5.1, 5.2, 5.3).

8. Device according to one of Patent Claims 1 to 7, **characterized in that** the measuring electrodes (4, 5) and the ionizer (2) are arranged in a tube (1).

## Revendications

1. Dispositif pour mesurer la concentration de particules chargées contenues dans un écoulement gazeux, comportant une première électrode de mesure (4) pour mesurer le chargement des particules,
**caractérisé par**
un ionisateur (2) pour charger les particules (9), l'électrode de mesure (4) étant disposée dans la direction de l'écoulement (10) derrière l'ionisateur (2), une autre électrode de mesure (5.1, 5.2, 5.3) disposée dans la direction de l'écoulement (10) derrière la première électrode de mesure (4), une électrode de déviation (16.1, 16.2), pour mesurer la vitesse d'écoulement en liaison avec cette première électrode, les électrodes de mesure (4, 5.1, 5.2, 5.3) étant connectées à une masse au moyen d'amplificateurs de charge (6, 11, 12, 13), en particulier des amplificateurs d'opération, et l'électrode de déviation étant orientée vers les différentes électrodes de mesure pour séparer les particules en fonction de leur grandeur.

2. Dispositif selon la revendication 1,
**caractérisé par**
un blocage de champ (3) entre l'ionisateur (2) et la première électrode de mesure (4).

3. Dispositif selon la revendication 2,
**caractérisé en ce que**
le blocage de champ (3) présente deux grilles (3.1, 3.2), la première grille (3.2) étant reliée à une source de tension (17) et l'autre grille (3.1) à une unité de mesure (15) pour la mesure de l'écoulement.

4. Dispositif selon l'une quelconque des revendications 1 à 3,
**caractérisé en ce que**
les électrodes de mesure (4, 5.1, 5.2, 5.3) sont de forme circulaire.

5. Dispositif selon l'une quelconque des revendications 1 à 4,
**caractérisé en ce que**
l'ionisateur (2) est de forme circulaire.

6. Dispositif selon l'une quelconque des revendications 1 à 5,
**caractérisé en ce que**
l'ionisateur (2) présente une électrode extérieure (7), et une autre unité de mesure (15) permet de mesurer l'écoulement ionique sur l'électrode extérieure (7).

7. Dispositif selon l'une quelconque des revendications 1 à 6,
**caractérisé en ce qu'**
on peut coupler de façon capacitive une tension dans l'électrode de mesure (4) au moyen d'une électrode (8) ou du blocage de champ (3.2) ou de l'autre électrode de mesure (5.1, 5.2, 5.3).

8. Dispositif selon l'une quelconque des revendications 1 à 7,
**caractérisé en ce que**
l'électrode de mesure (4, 5) et l'ionisateur (2) sont disposés dans un tube (1).
